# EUROPEAN PATENT APPLICATION

(11) **EP 4 485 680 A1**
(43) Date of publication of application: **01.01.2025**
(21) Application number: 23894938.2
(22) Date of filing: 17.11.2023
(51) Int. Cl.: H01M 50/59, H01M 50/586, H01M 50/107, H01M 10/0583

(54) **CYLINDRICAL BATTERY**

(30) Priority: 21.11.2022 KR 20220156483
(71) Applicant: LG Energy Solution, Ltd., Seoul 07335 (KR)
(72) Inventor: KIM, Yun Hwa, Daejeon 34122 (KR); LEE, Joonghoon, Daejeon 34122 (KR); HAN, In Kee, Daejeon 34122 (KR)
(74) Representative: Goddar, Heinz J.
(86) International application number: PCT/KR2023/018516
(87) International publication number: WO 2024/112010

(57) **Abstract**

The present disclosure relates to a cylindrical battery, specifically to a cylindrical battery having an electrode assembly and a battery case including an electrode assembly accommodation part, and more specifically to a cylindrical secondary battery having a jelly-roll type electrode assembly with an outer circumferential tab structure and a battery case including a protrusion part provided on at least a portion of an electrode assembly accommodation part.

## Description

### BACKGROUND

### Technical Field

The present disclosure relates to a cylindrical battery, specifically to a cylindrical battery having: an electrode assembly; and a battery case including an electrode assembly accommodation part, and more specifically to a cylindrical battery having: a jelly-roll type electrode assembly with an outer circumferential tab structure; and a battery case including an electrode assembly accommodation part. This application claims the benefit of Korean Patent Application No. 10-2022-0156483, submitted to the Korean Intellectual Property Office on November 21, 2022, and all content disclosed in the relevant document of the Korean Patent Application is included in the present specification.

### Background Art

In the case of a cylindrical battery, a jelly roll-shaped electrode assembly is manufactured by rolling long electrodes with a fixed width into a roll shape. A cylindrical battery manufactured by inserting such a jelly-roll type electrode assembly into a battery case repeats contraction/expansion of the electrodes during charging and discharging, and stress according to the step difference is formed depending on the structure of the jelly-roll.

In particular, in the case of a jelly-roll type electrode assembly with an anode outermost structure, the outermost anode covers the end of the cathode, and the space next to the cathode free edge becomes empty due to the thickness of the cathode. At this time, the step difference due to the thickness of the cathode creates stress in the anode, and such stress is concentrated on the surface opposite to the surface facing the cathode during charging and discharging to cause outer cracks on the anode.

In order to prevent the occurrence of cracks on the anode, there is a need to develop technology that can improve the concentration of anode stress in the relevant region.

### SUMMARY

The present disclosure seeks to provide a cylindrical battery that improves a problem of cracks occurring in the outer portion of the anode by changing the design of the battery case.

However, the problem to be solved by the present disclosure is not limited to the problem mentioned above, and other problems not mentioned will be clearly understood by those skilled in the art from the following description.

One embodiment of the present disclosure provides a cylindrical battery having: an electrode assembly; and a battery case including an electrode assembly accommodation part, wherein the battery case includes a protrusion part provided on at least a portion of the electrode assembly accommodation part, the electrode assembly has a first electrode, a separator, and a second electrode stacked and wound therein, and the second electrode includes: a second electrode current collector; and a second electrode active material layer which is provided on at least one surface of the second electrode current collector and has a longitudinal directional end at the same position as the second electrode current collector.

### ADVANTAGEOUS EFFECTS

The cylindrical battery according to one embodiment of the present disclosure may include a battery case including an electrode assembly accommodation part, and the battery case may include a protrusion part provided on at least a portion of the electrode assembly accommodation part, thereby suppressing expansion of the electrode assembly during progression of the cycle and preventing cracks and deformation of the electrode assembly due to stress concentration on the outermost anode.

The effect of the present disclosure is not limited to the above-described effect, and effects not mentioned will be clearly understood by those skilled in the art from the specification of the present application and the accompanying drawings.

### BRIEF DESCRIPTION OF THE DRAWINGS

FIG. 1 shows an electrode assembly of a cylindrical battery according to one embodiment of the present disclosure and a battery case including an electrode assembly accommodation part.
FIG. 2 shows states before and after accommodating the electrode assembly of a cylindrical battery according to one embodiment of the present disclosure. Specifically, FIG. 2 is a longitudinal cross-sectional view cut along the line A-A' of the cylindrical battery in FIG. 1.
FIG. 3 shows a state after accommodating an electrode assembly of a cylindrical battery according to one embodiment of the present disclosure. Specifically, FIG. 3 is a cross-sectional view cut along the line B-B' of the cylindrical battery in FIG. 1.
FIG. 4 schematically shows a stepped portion of a cylindrical battery according to one embodiment of the present disclosure.
FIG. 5 shows an electrode assembly of a cylindrical battery according to one embodiment of the present disclosure.

### [Explanation of reference numerals]

100, 100': First electrode
101: First electrode current collector
102, 103: First electrode active material layer
110: Longitudinal directional end of first electrode
20, 20': Separator
300: Second electrode
301: Second electrode current collector
302, 303: Second electrode active material layer
310: Longitudinal directional end of second electrode
40: Second electrode tab
C: Core part
50: Battery case
51: Electrode assembly accommodation part
52: Protrusion part
H: Height of protrusion part
W: Width of protrusion part
T: Thickness of protrusion part
60: Stepped portion
70: Disconnection prevention tape
L 1: Depth of inner circumferential surface of electrode assembly accommodation part
L2: Diameter of electrode assembly
L3: Inner diameter of electrode assembly accommodation part
L4: Thickness of longitudinal directional end of second electrode
L5: Separation distance between longitudinal directional end of stepped portion and longitudinal directional end of second electrode

### DESCRIPTION OF EXEMPLARY EMBODIMENTS

Throughout the specification of the present application, when a part is said to "include" a certain element, this means that it may further include other elements rather than excluding other elements, unless specifically stated to the contrary.

Throughout the specification of the present application, when a member is said to be located "on" the other member, this includes not only the case where the member is in contact with the other member, but also the case where another member exists between the two members.

Hereinafter, the present disclosure will be described in detail with reference to the drawings. However, the drawings are for illustrating the present disclosure, and the scope of the present disclosure is not limited by the drawings.

One embodiment of the present disclosure provides a cylindrical battery having: an electrode assembly; and a battery case including an electrode assembly accommodation part, wherein the battery case includes a protrusion part provided on at least a portion of the electrode assembly accommodation part, the electrode assembly has a first electrode, a separator, and a second electrode stacked and wound therein, and the second electrode includes: a second electrode current collector; and a second electrode active material layer which is provided on at least one surface of the second electrode current collector and has a longitudinal directional end at the same position as the second electrode current collector.

The cylindrical battery according to one embodiment of the present disclosure may include a battery case including an electrode assembly accommodation part, and the battery case may include a protrusion part provided on at least a portion of the electrode assembly accommodation part, thereby suppressing expansion of the electrode assembly during progression of the cycle and preventing cracks and deformation of the electrode assembly due to stress concentration on the outermost anode.

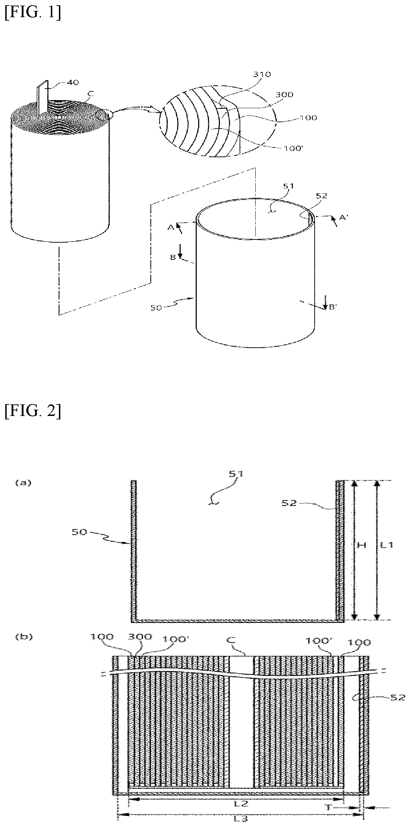

FIG. 1 shows an electrode assembly of a cylindrical battery according to one embodiment of the present disclosure and a battery case including an electrode assembly accommodation part.

Referring to FIG. 1, the cylindrical battery according to one embodiment of the present disclosure may have a battery case 50 including an electrode assembly accommodation part 51. Specifically, the battery case 50 and the electrode assembly accommodation part 51 may have a shape corresponding to the shape of the electrode assembly, and the battery case 50 and the electrode assembly accommodation part 51 may be cylindrical in order to accommodate a jelly-roll type electrode assembly. In the battery case, after the process of inserting the electrode assembly into the electrode assembly accommodation part and injecting the electrolyte solution thereinto, the upper portion of the battery case may be compressed in the central direction through a beading process to fix the movement of the electrode assembly in the vertical direction, prevent detachment of the electrode assembly through this arrangement, and couple a cap assembly to the upper portion of the battery case. Specifically, the cylindrical battery according to one embodiment of the present disclosure may further include a cap assembly coupled to an opening portion of the battery case, and the cap assembly may include a top cap, a safety vent, and a current blocking element.

According to one embodiment of the present disclosure, the battery case may be cylindrical. That is, the electrode assembly according to the present disclosure may be accommodated in a cylindrical battery case, and since the battery case including: an electrode assembly; a cap assembly; and an electrolyte has a cylindrical shape, the shape of a manufactured battery itself may be cylindrical.

According to one embodiment of the present disclosure, the interior of the battery case may contain an electrolyte. Specifically, the electrolyte may include an organic liquid electrolyte, an inorganic liquid electrolyte, a solid polymer electrolyte, a gel-type polymer electrolyte, a solid inorganic electrolyte, or a molten-type inorganic electrolyte that can be used in the manufacture of a lithium secondary battery, but is not limited thereto. Specifically, the electrolyte may include a non-aqueous organic solvent and a metal salt.

According to one embodiment of the present disclosure, the non-aqueous organic solvent may include, for example, aprotic organic solvents such as N-methyl-2-pyrrolidinone, propylene carbonate, ethylene carbonate, butylene carbonate, dimethyl carbonate, diethyl carbonate, gamma-butyrolactone, 1,2-dimethoxy ethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, dioxolane derivatives, sulfolane, methyl sulfolane, 1,3-dimethyl-2-imidazolidinone, propylene carbonate derivatives, tetrahydrofuran derivatives, ether, methyl propionate, and ethyl propionate.

According to one embodiment of the present disclosure, the metal salt may be a lithium salt, and the lithium salt is a material that is easily soluble in the non-aqueous electrolyte solution, and for example, one or more selected from the group consisting of F⁻, Cl⁻, I⁻, NO₃⁻, N(CN)²⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻ may be used as anions of the lithium salt.

According to one embodiment of the present disclosure, in addition to the electrolyte components, the electrolyte may further include, for example, one or more additives of a halo-alkylene carbonate-based compound such as difluoroethylene carbonate or the like, pyridine, triethyl phosphite, triethanolamine, cyclic ether, ethylene diamine, n-glyme, hexaphosphorous triamide, nitrobenzene derivatives, sulfur, quinone-imine dyes, N-substituted oxazolidinones, N,N-substituted imidazolidines, ethylene glycol dialkyl ether, ammonium salt, pyrrole, 2-methoxyethanol, or aluminum trichloride for the purpose of improving battery life characteristics, suppressing battery capacity reduction, and improving battery discharge capacity.

FIG. 2 shows states before and after accommodating the electrode assembly of a cylindrical battery according to one embodiment of the present disclosure. Specifically, FIG. 2 is a longitudinal cross-sectional view cut along the line A-A' of the cylindrical battery in FIG. 1. More specifically, FIG. 2(A) shows a state before accommodating the electrode assembly of a cylindrical battery according to one embodiment of the present disclosure, and FIG. 2(B) shows a state after accommodating the electrode assembly of a cylindrical battery according to one embodiment of the present disclosure.

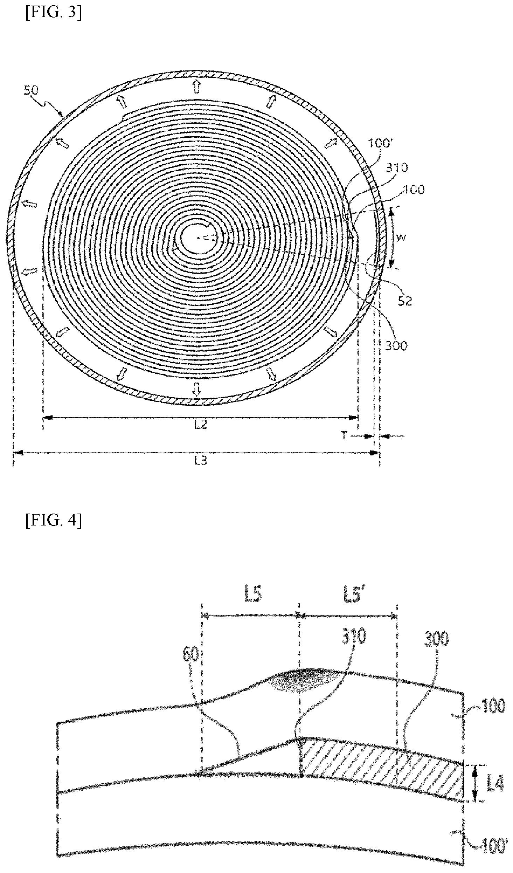

FIG. 3 shows a state after accommodating an electrode assembly of a cylindrical battery according to one embodiment of the present disclosure. Specifically, FIG. 3 is a cross-sectional view cut along the line B-B' of the cylindrical battery in FIG. 1.

Referring to FIGS. 2 and 3, the cylindrical battery according to one embodiment of the present disclosure may have an electrode assembly and a battery case 50, and the battery case 50 may include a protrusion part 52 provided on at least a portion of the electrode assembly accommodation part 51. Specifically, the protrusion part 52 may be provided on the inner circumferential surface of the electrode assembly accommodation part 51 of the battery case 50, and may be provided to have a predetermined width W, height H, and thickness T.

Since the electrode assembly accommodated inside the cylindrical battery during charging and discharging of a cylindrical battery repeats contraction/expansion, and the wider the gap between the electrode assembly and the inner circumferential surface of the electrode assembly accommodation part, the wider the space in which the electrode assembly can expand, the level of contraction/expansion may increase. Accordingly, since the stress acting on the outermost layer also increases, crack and deformation problems may occur. At this time, the protrusion part may protrude from the inner circumferential surface of the electrode assembly accommodation part to a predetermined thickness to fill a portion of the internal space of the battery case and to control the space formed between the electrode assembly and the inner circumferential surface of the electrode assembly accommodation part. Here, the internal space of the battery case may mean a region having a volume excluding the volume of the electrode assembly accommodated therein from the volume surrounded by the inner circumferential surface of the electrode assembly accommodation part.

That is, the protrusion part provided in the electrode assembly accommodation part of the cylindrical battery according to the present disclosure may suppress expansion of the electrode assembly located inside the electrode assembly accommodation part of the cylindrical battery during charging and discharging to prevent cracks and deformation due to stress concentration in the outermost layer of the electrode assembly. Specifically, the protrusion part may occupy a certain space within the electrode assembly accommodation part, thereby suppressing expansion of the electrode assembly in a direction opposite to the inner circumferential surface of the electrode assembly accommodation part, that is, in a direction opposite to the direction opposite to the winding axis of the electrode assembly, to reduce the level of increase in the pattern length of the first electrode and the second electrode. More specifically, stretching in the direction opposite to the inner circumferential surface of the electrode assembly accommodation part of the first electrode, that is, in the direction opposite to the direction opposite to the winding axis, may be reduced, thereby preventing cracks and deformation due to stress concentration in the outermost layer of the electrode assembly.

According to one embodiment of the present disclosure, the volume of the internal space of the battery case may be 2% or more to 5% or less based on 100% of the volume of the electrode assembly accommodation part.

According to one embodiment of the present disclosure, the electrode assembly may have a diameter of 97% or more to 99.5% or less based on 100% of the inner diameter of the electrode assembly accommodation part. In other words, referring to FIGS. 2 and 3, the electrode assembly may have a diameter L2 of 97% or more to 99.5% or less based on 100% of the inner diameter L3 of the electrode assembly accommodation part.

When satisfying the relationship between the volume of the internal space of the aforementioned battery case and the volume of the electrode assembly accommodation part, or the relationship between the diameter of the electrode assembly and the inner diameter of the electrode assembly accommodation part, it may be easier to control the space formed between the electrode assembly and the inner circumferential surface of the electrode assembly accommodation part due to formation of the protrusion part, and it may be easier to prevent cracks and deformation of the electrode assembly due to stress concentration on the outermost anode.

According to one embodiment of the present disclosure, the protrusion part may be made of a material that is the same as or different from the battery case. In other words, the protrusion part may be provided on at least a portion of the electrode assembly accommodation part by adjusting the thickness of the battery case itself, for example, the aluminum can itself, to thick, but is not limited thereto.
Moreover, the protrusion part may be provided on the inner circumferential surface of the electrode assembly accommodation part. A separate protrusion part made of any one conductive material that is the same as or different from the battery case, for example, a conductive material, which is any one selected from stainless steel, aluminum, nickel, titanium, fired carbon, or an aluminum or stainless steel surface surface-treated with carbon, nickel, titanium, silver, or the like, may be attached on the inner circumferential surface of the electrode assembly accommodation part.

According to one embodiment of the present disclosure, the protrusion part may be provided in a region of 5% or more to 15% or less based on 100% of the circumference of the inner circumferential surface of the electrode assembly accommodation part. In other words, referring to FIG. 3, the protrusion part 52 may have a width W of 5% or more to 15% or less based on 100% of the circumference of the inner circumferential surface of the electrode assembly accommodation part 51. Specifically, the protrusion part may be provided in a region of 7% or more, 9% or more, or 11% or more based on 100% of the circumference of the inner circumferential surface of the electrode assembly accommodation part. In addition, the protrusion part may be provided in a region of 13% or less, 11% or less, or 9% or less based on 100% of the circumference of the inner circumferential surface of the electrode assembly accommodation part.

When the above-described range is satisfied, it may be easier to control the space formed between the electrode assembly and the inner circumferential surface of the electrode assembly accommodation part, and the effect of suppressing expansion of the electrode assembly located inside the cylindrical battery during battery charging and discharging may be more excellent.

According to one embodiment of the present disclosure, the protrusion part may be provided in a region of 95% or more to 100% or less based on 100% of the depth of the inner circumferential surface of the electrode assembly accommodation part. In other words, referring to FIG. 2(A), the protrusion part 52 may have a height H of 95% or more to 100% or less based on 100% of the depth (L1) of the inner circumferential surface of the electrode assembly accommodation part. Specifically, the protrusion part may be provided in a region of 95% or more to 97.5% or less, or 97.5% or more to 100% or less based on 100% of the depth of the inner circumferential surface of the electrode assembly accommodation part. For example, the protrusion part may be provided in a region of 100% based on 100% of the depth of the inner circumferential surface of the electrode assembly accommodation part, and the protrusion part 52 may have a height H equal to the depth (L1) of the inner circumferential surface of the electrode assembly accommodation part. When the above-described range is satisfied, it may be easier to control the space formed between the electrode assembly and the inner circumferential surface of the electrode assembly accommodation part, and the effect of suppressing expansion of the electrode assembly located inside the cylindrical battery during battery charging and discharging may be more excellent.

According to one embodiment of the present disclosure, the electrode assembly may be one in which a first electrode, a separator, and a second electrode are stacked and wound, and the second electrode may include: the second electrode current collector; and a second electrode active material layer which is provided on at least one surface of the second electrode current collector and has a longitudinal directional end at the same position as the second electrode current collector. In other words, the longitudinal directional end of the second electrode may be in the form of a free edge. Here, the free edge shape may mean a shape in which the end of the second electrode active material layer and the end of the electrode current collector coincide, and this may not only include the case where the longitudinal directional ends completely coincide based on the plane perpendicular to the longitudinal direction, but also include cases where there are errors in the preparation process and measurement.

According to one embodiment of the present disclosure, the first electrode may be an anode, and the second electrode may be a cathode.

According to one embodiment of the present disclosure, the first electrode may include a first electrode current collector and a first electrode active material layer provided on the first electrode current collector. Specifically, the first electrode may include a first electrode current collector and a first electrode active material layer which is formed on one or both surfaces of the first electrode current collector and contains a first electrode active material. In other words, the first electrode active material layer may be formed on the first electrode holding part of the first electrode current collector, and the surface that is not provided with the first electrode active material layer may be expressed as a first electrode non-coating area.

According to one embodiment of the present disclosure, the first electrode current collector may include a first electrode holding part on which the first electrode active material layer is formed and a first electrode non-coating area on which the first electrode active material layer is not formed, and include a first electrode tab on the first electrode non-coating area. Specifically, the first electrode current collector may include a first electrode non-coating area, and include a first electrode tab formed on the first electrode non-coating area. Accordingly, the electrode assembly manufactured may include one or more first electrode tabs. For example, referring to FIG. 1, the first electrode tab (not shown) protrudes to the bottom surface of the electrode assembly and serves to be electrically connected to the inner circumferential surface of the electrode assembly accommodation part 51 of the battery case 50, and when the first electrode tab allows the electrode assembly to be accommodated into the electrode assembly accommodation part 51, the protrusion part 52 may be fixed to be provided in the region corresponding to a longitudinal directional end 310 of the second electrode included in the electrode assembly.

According to one embodiment of the present disclosure, the first electrode active material layer may contain a first electrode active material including one or more selected from the group consisting of silicon-based materials and carbon-based materials. In addition, the first electrode active material layer may further contain a first electrode conductive material and a first electrode binder, and the first electrode active material; the first electrode conductive material; and the first electrode binder may include materials used in the art as an anode active material; an anode conductive material; and an anode binder without limitation.

According to one embodiment of the present disclosure, the first electrode current collector may be any conductive material without causing chemical changes in the relevant battery, and is not particularly limited. For example, copper, stainless steel, aluminum, nickel, titanium, fired carbon, or an aluminum or stainless steel surface surface-treated with carbon, nickel, titanium, silver, etc. may be used as the first electrode current collector. Specifically, a transition metal that adsorbs carbon well, such as copper or nickel, may be used as the first electrode current collector.

The first electrode current collector may have a thickness of 8 µm or more to 180 µm or less, but the thickness of the first electrode current collector is not limited thereto.

According to one embodiment of the present disclosure, the first electrode binder may include at least one selected from a group consisting of polyvinylidene fluoride-hexafluoropropylene copolymer (PVDF-co-HFP), polyvinylidene fluoride, polyacrylonitrile, polymethylmethacrylate, polyvinylalcohol, carboxymethylcellulose (CMC), starch, hydroxypropylcellulose, regenerated cellulose, polyvinylpyrrolidone, tetrafluoroethylene, polyethylene, polypropylene, polyacrylic acid, ethylene-propylene-diene monomer (EPDM), sulfonated EPDM, styrene butadiene rubber (SBR), fluororubber, and materials in which hydrogen thereof is substituted with Li, Na, or Ca, and may also include various copolymers thereof.

According to one embodiment of the present disclosure, the first electrode conductive material is not particularly limited as long as it has conductivity without causing chemical changes in the relevant battery. For example, graphite such as natural graphite or artificial graphite; carbon black such as acetylene black, Ketjen black, channel black, furnace black, lamp black, and thermal black; conductive fibers such as carbon fibers and metal fibers; conductive tubes such as carbon nanotubes; metal powders such as fluorocarbon, aluminum, and nickel powder; conductive whiskers such as zinc oxide and potassium titanate; conductive metal oxides such as titanium oxide; and conductive materials such as polyphenylene derivatives may be used as the first electrode conductive material.

According to one embodiment of the present disclosure, the second electrode may include a second electrode current collector and a second electrode active material layer provided on the second electrode current collector. Specifically, the second electrode may include a second electrode current collector and a second electrode active material layer which is formed on one or both surfaces of the second electrode current collector and contains a second electrode active material. In other words, the second electrode active material layer may be formed on the second electrode holding part of the second electrode current collector, and the surface which is not provided with the second electrode active material layer may be expressed as a second electrode non-coating area.

According to one embodiment of the present disclosure, the second electrode current collector may include a second electrode holding part on which the second electrode active material layer is formed and a second electrode non-coating area on which the second electrode active material layer is not formed, and include a second electrode tab on the second electrode non-coating area. Specifically, the second electrode current collector may include a second electrode non-coating area, and include a second electrode tab formed on the second electrode non-coating area. Accordingly, an electrode assembly to be manufactured may include one or more second electrode tabs. For example, referring to FIG. 1, the second electrode tab 40 may protrude from the top surface of the electrode assembly to serve to be electrically connected to the cap assembly (not shown). When the electrode assembly is accommodated in the electrode assembly accommodation part 51, the second electrode tab may be fixed so that the protrusion part 52 is provided in a region corresponding to the longitudinal directional end 310 of the second electrode included in the electrode assembly.

According to one embodiment of the present disclosure, the second electrode current collector is not particularly limited as long as it has conductivity without causing chemical changes in the battery. Specifically, stainless steel, aluminum, nickel, titanium, fired carbon, or an aluminum or stainless steel surface surface-treated with carbon, nickel, titanium, silver, etc. may be used as the second electrode current collector.

In addition, the second electrode current collector may typically have a thickness of 60 µm or more to 200 µm or less, and the adhesive force of the second electrode active material may be increased by forming fine irregularities on the surface of the second electrode current collector. For example, it can be used in various forms such as films, sheets, foils, nets, porous materials, foams, and non-woven materials.

According to one embodiment of the present disclosure, the second electrode active material may be a commonly used positive electrode active material. Specifically, the second electrode active material may include: a layered compound such as lithium cobalt oxide (LiCoO₂) or lithium nickel oxide (LiNiO₂), or a compound substituted with one or more transition metals; lithium iron oxides such as LiFe₃O₄, etc.; lithium manganese oxides with the formula Li₁₊ₓMn₂₋ₓO₄ (0≤x≤0.33), such as LiMnO₃, LiMn₂O₃, LiMnO₂, etc.; lithium copper oxide (Li₂CuO₂); vanadium oxides such as LiVsOs, V₂O₅, Cu₂V₂O₇, etc.; Ni site-type lithium nickel oxides represented by the formula LiNi_{1-y}M_{y}O₂ (where M is at least one selected from the group consisting of Co, Mn, Al, Cu, Fe, Mg, B, and Ga, and satisfies 0.01<y<0.3); lithium manganese composite oxides represented by the formula LiMn_{2-z}M_{z}O₂ (where M is at least one selected from the group consisting of Co, Ni, Fe, Cr, Zn, and Ta, and satisfies 0.01≤z≤0.1) or Li₂Mn₃MO₈ (where M is at least one selected from the group consisting of Fe, Co, Ni, Cu, and Zn); and LiMn₂O₄ in which part of Li in the formula is substituted with an alkaline earth metal ion, but it is not limited thereto. The second electrode may be Li-metal.

According to one embodiment of the present disclosure, the second electrode active material layer may further contain a second electrode conductive material and a second electrode binder. The second electrode conductive material is used to impart conductivity to the electrodes, and can be used without particular restrictions as long as it has electronic conductivity without causing chemical changes in the battery being constructed. Specifically, as the second electrode conductive material, graphite such as natural graphite or artificial graphite; carbon-based materials such as carbon black, acetylene black, Ketjen black, channel black, furnace black, lamp black, summer black, and carbon fiber; metal powders or metal fibers such as copper, nickel, aluminum, and silver; conductive whiskeys such as zinc oxide and potassium titanate; conductive metal oxides such as titanium oxide; or conductive polymers such as polyphenylene derivatives may be used, and one or mixtures of two or more thereof may be used.

In addition, the second electrode binder serves to improve adhesion between the second electrode active material particles and adhesive force between the second electrode active material and the second electrode current collector. Specific examples thereof may include polyvinylidene fluoride (PVDF), vinylidenefluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, ethylene-propylene-diene polymer (EPDM), sulfonated-EPDM, styrene butadiene rubber (SBR), fluororubber, or various copolymers thereof, and one or mixtures of two or more thereof may be used.

According to one embodiment of the present disclosure, the separator separates the anode and the cathode and provides a moving passage of lithium ions, and can be used without particular restrictions as long as it is commonly used as a separator in a secondary battery, and in particular, it is desirable to have low resistance to ion movement of the electrolyte and excellent electrolyte moisturizing ability. Specifically, porous polymer films, for example, porous polymer films prepared from polyolefin-based polymers such as ethylene homopolymer, propylene homopolymer, ethylene/butene copolymer, ethylene/hexene copolymer, and ethylene/methacrylate copolymer, or a laminated structure of two or more layers thereof may be used. In addition, conventional porous non-woven fabrics, for example, non-woven fabrics made of high melting point glass fibers, polyethylene terephthalate fibers, etc., may be used. In addition, a coated separator containing ceramic components or polymer materials may be used to ensure heat resistance or mechanical strength, and may optionally be used in a single-layer or multi-layer structure.

According to one embodiment of the present disclosure, the longitudinal directional end of the first electrode may be extended longer than the longitudinal directional end of the second electrode and thus additionally wound around the outer portion of the electrode assembly. Specifically, the electrode assembly according to one embodiment of the present disclosure may have a structure in which a first electrode, which is an outermost layer, covers the longitudinal directional end of the second electrode, which has a free edge shape, and the first electrode may include a stepped portion, which is an empty space formed in a region covering the second end of the second electrode.

FIG. 4 schematically shows a stepped portion of a cylindrical battery according to one embodiment of the present disclosure.

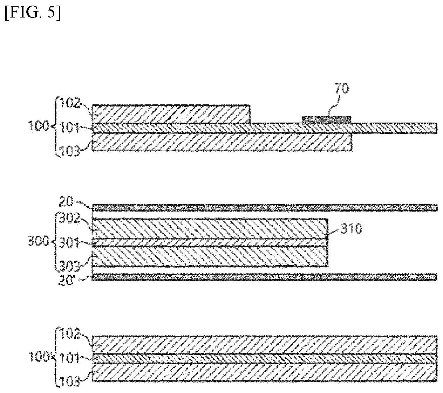

FIG. 5 shows an electrode assembly of a cylindrical battery according to one embodiment of the present disclosure.

Specifically, referring to FIGS. 4 and 5, a first electrode 100 may be present in the outermost layer of the electrode assembly, and the first electrode 100 may be provided with first electrode active material layers 102 and 103 on both surfaces of the first electrode current collector 101, respectively, and may include a non-coating area. Meanwhile, a second electrode 300 may be present on one surface opposite to the winding axis of the first electrode, which is the outermost layer of the electrode assembly, and the second electrode 300 may be provided with second electrode active material layers 302 and 303 on both surfaces of the second electrode current collector 301, respectively, but may not include a non-coating area. In other words, it may be in the form of a free edge where the ends of the second electrode current collector and the second electrode active material layers coincide. That is, the longitudinal directional end 310 of the second electrode 300 may include the ends of the second electrode active material layers 302 and 303 and the end of the second electrode current collector 301 having the same length in the longitudinal direction, and in the longitudinal directional end 310 of the second electrode 300, the ends of the second electrode active material layers 302 and 303 and the end of the second electrode current collector 301 having the same length in the longitudinal direction may coincide. Meanwhile, according to one embodiment of the present disclosure, the non-coating area present on the surface opposite to the surface opposite to the end of the longitudinal directional end 310 of the second electrode 300 of the first electrode 100 may further include a disconnection prevention tape 70 attached to reduce the occurrence possibility of short circuits or cracks due to stress concentration in the relevant region.

According to one embodiment of the present disclosure, the first electrode may be in direct contact with the inner surface of the battery case so that the battery case may perform a role of a first electrode terminal. Specifically, the first electrode, which is the outermost layer of the electrode assembly, may be an anode, and the electrode assembly may be an anode outermost structure in which an anode/separator/cathode/separator is wound. In other words, it may have an outer circumferential tab structure that exposes the anode to the outermost portion of the electrode assembly.

According to one embodiment of the present disclosure, the electrode assembly may be accommodated in the electrode assembly accommodation part, and the protrusion part may be provided in a region corresponding to the longitudinal directional end of the second electrode contained in the electrode assembly. Specifically, the protrusion part may be provided so that its central portion coincides with the longitudinal directional end of the second electrode. Here, the central portion of the protrusion part may mean a line connecting points corresponding to 1/2 of the width directional length of the protrusion part.

Referring to FIGS. 1 to 3, the cylindrical battery according to one embodiment of the present disclosure may have an electrode assembly and a battery case 50, and the battery case may include a protrusion part 52 provided on at least a portion of the electrode assembly accommodation part 51. At this time, the protrusion part may be provided on the inner circumferential surface of the electrode assembly accommodation part 51 of the battery case, and may be provided in a region corresponding to the longitudinal directional end 310 of the second electrode 300 contained in the electrode assembly. In other words, the protrusion part 52 may be provided in a region corresponding to the longitudinal directional end 310 of the second electrode, which is a free edge form.

When the protrusion part is provided in a region corresponding to the longitudinal directional end of the second electrode contained in the electrode assembly, in the process of expanding the electrode assembly in the direction of the inner circumferential surface of the electrode assembly accommodation part, the region corresponding to the longitudinal directional end of the second electrode may be first contacted and restrained by the battery case to suppress expansion. Specifically, since the electrode assembly repeats contraction/expansion in the direction of the inner circumferential surface of the electrode assembly accommodation part of the battery case adjacent to the outer circumferential surface during battery charging and discharging, it is repeatedly contacted and spaced apart from the inner circumferential surface of the electrode assembly accommodation part of the battery case. That is, the larger the separation distance between the outer circumferential surface of the electrode assembly and the inner circumferential surface of the adjacent electrode assembly accommodation part adjacent thereto, the more sufficient the space is for the electrode assembly to expand so that the degree of expansion of the electrode assembly may increase. At this time, the region corresponding to the longitudinal directional end of the second electrode may have a smaller separation distance from the inner circumferential surface of the accommodation part of the battery case than the region that does not correspond to the protrusion part, and the outer circumferential surface may be first contacted and restrained by the protrusion part during expansion of the electrode assembly so that the effect of suppressing expansion of the corresponding region may be excellent.

According to one embodiment of the present disclosure, the electrode assembly may be accommodated in the electrode assembly accommodation part, and the protrusion part may be formed in a region corresponding to the longitudinal directional end of the second electrode by interposing the first electrode located at the outermost portion of the electrode assembly. When the protrusion part is formed in the region corresponding to the longitudinal directional end of the second electrode by interposing the first electrode located at the outermost portion of the electrode assembly, expansion of the corresponding region is suppressed so that the stress concentration of the facing surface portion of the second electrode of the first electrode due to the longitudinal directional end of the second electrode may be alleviated, and the crack and deformation prevention effect may be more excellent.

According to one embodiment of the present disclosure, the electrode assembly may be accommodated in the electrode assembly accommodation part, the protrusion part may be provided in a region corresponding to a stepped portion included in the electrode assembly, and the stepped portion may be an empty space in which the first electrode is formed in a region covering the longitudinal directional end of the second electrode. Specifically, referring to FIGS. 3 and 4 , the protrusion part 52 may be provided to cover the entire region corresponding to the stepped portion 60 . Here, the "region corresponding to the stepped portion" may mean a region from a line parallel to the longitudinal directional end 310 of the second electrode on the first electrode 100 to a line connecting the points where the first electrode and the separator touch each other by allowing a separator to be interposed based on the longitudinal direction of the first electrode 100, that is, a region consisting of a region having a distance L5 between the longitudinal directional end of the stepped portion 60 and the longitudinal directional end 310 of the second electrode and a region having the same distance L5' as L5 in the direction opposite to the longitudinal direction of the first electrode.

In other words, the "region corresponding to the stepped portion" may mean a region having distances of L5 and L5' to both sides of the first electrode 100 in the longitudinal direction from a line parallel to the longitudinal directional end 310 of the second electrode on the first electrode 100, and may have a length of 'L5 + L5' = L5 + L5 = 2×L5'. That is, the width W of the protrusion part 52 may be greater than the length of the region corresponding to the stepped portion 60 and may be 2×L5' or more.

According to one embodiment of the present disclosure, the thickness of the protrusion part may be 30% or more to 50% or less of a step difference formed by the thickness of the longitudinal directional end of the second electrode. In other words, referring to FIGS. 3 and 4, the thickness T of the protrusion part may be 30% or more to 50% or less of the thickness L4 of the longitudinal directional end 310 of the second electrode. Specifically, the thickness of the protrusion part may be 30% or more to 40% or less, or 40% or more to 50% or less of the step difference formed by the thickness of the longitudinal directional end of the second electrode. When the thickness of the protrusion part satisfies the above-described range, the effect of suppressing expansion of the electrode assembly located inside the cylindrical battery during battery charging and discharging and the effect of preventing cracking thereof may be more excellent.

One embodiment of the present disclosure provides a battery module including the cylindrical battery as a unit cell and a battery pack including the same. Since the battery module and battery pack include the secondary battery with high capacity, high battery stability, and improved lifespan characteristics, they may be used as a power source for medium to large devices selected from the group consisting of electric vehicles, hybrid electric vehicles, plug-in hybrid electric vehicles, and power storage systems.

Although preferred embodiments have been presented above to aid understanding of the present disclosure, the above embodiments are merely illustrative of the present description, it is clear to those skilled in the art that various changes and modifications are possible within the scope and technical spirit range of the present description, and it is natural that such variations and modifications fall within the scope of the accompanying patent claims.

## Claims

1. A cylindrical battery, comprising:
an electrode assembly having a first electrode, a separator, and a second electrode stacked and wound therein; and
a battery case comprising an electrode assembly accommodation part and a protrusion part disposed on at least a portion of the electrode assembly accommodation part,
wherein the second electrode comprises a second electrode current collector and a second electrode active material layer disposed on at least one surface of the second electrode current collector, the second electrode active material layer having a longitudinal directional end thereof at a same position as a longitudinal directional end of the second electrode current collector.

2. The cylindrical battery of claim 1, wherein the protrusion part extends across a region of 5% or more to 15% or less of a circumference of an inner circumferential surface of the electrode assembly accommodation part.

3. The cylindrical battery of claim 1, wherein the protrusion part extends across a region of 100% of a depth of an inner circumferential surface of the electrode assembly accommodation part.

4. The cylindrical battery of claim 1, wherein the first electrode is an anode, and the second electrode is a cathode.

5. The cylindrical battery of claim 1, wherein a longitudinal directional end of the first electrode extends further than the longitudinal directional end of the second electrode current collector and is thus further wound around an outer portion of the electrode assembly.

6. The cylindrical battery of claim 1, wherein the electrode assembly is accommodated in the electrode assembly accommodation part, and the protrusion part extends across a region of an inner circumferential surface of the electrode assembly accommodation part adjacent to the longitudinal directional end of the second electrode current collector of the electrode assembly.

7. The cylindrical battery of claim 1, wherein the electrode assembly is accommodated in the electrode assembly accommodation part, the protrusion part extends across a region of an inner circumferential surface of the electrode assembly accommodation part adj acent to the longitudinal directional end of the second electrode current collector, and a portion of the first electrode located at the outermost portion of the electrode assembly extends between the protrusion part and the longitudinal directional end of the second electrode current collector.

8. The cylindrical battery of claim 1, wherein the electrode assembly is accommodated in the electrode assembly accommodation part, the protrusion part extends across a region corresponding to a stepped portion of the electrode assembly, and the stepped portion is an empty space in which the first electrode extends across a region covering the longitudinal directional end of the second electrode current collector.

9. The cylindrical battery of claim 1, wherein a thickness of the protrusion part is 30% or more to 50% or less of a step difference formed by a thickness of the longitudinal directional end of the second electrode current collector and the longitudinal directional end of the second electrode active material layer.
